# EUROPÄISCHE PATENTSCHRIFT

(11) **EP 3 280 108 B1**
(45) Veröffentlichungstag und Bekanntmachung des Hinweises auf die Patenterteilung: **13.01.2021**
(21) Anmeldenummer: 16020295.8
(22) Anmeldetag: 03.08.2016
(51) Int. Cl.: H04L 29/06, H04W 12/12

(54) **SYSTEM UND VERFAHREN ZUR NUTZERINDIVIDUELLEN MISSBRAUCHSERKENNUNG UND -VERMEIDUNG BEI NUTZUNG VON TELEKOMMUNIKATIONSDIENSTEN**
SYSTEM FOR USER-INDIVIDUAL DETECTION AND AVOIDANCE OF MISUSE DURING USE OF TELECOMMUNICATION SERVICES
SYSTÈME INDIVIDUALISÉ PERMETTANT À UN UTILISATEUR LA RECONNAISSANCE ET L'ÉVITEMENT D'UN MAUVAIS USAGE LORS DE L'UTILISATION DE SERVICES DE TÉLÉCOMMUNICATION

(43) Veröffentlichungstag der Anmeldung: 07.02.2018
(73) Patentinhaber: Deutsche Telekom AG, 53113 Bonn (DE)
(72) Erfinder: Haberkorn, Günter, 92262 Birgland/Schwend (DE)
(74) Vertreter: Raible Deissler Lehmann Patentanwälte PartG mbB

(56) Entgegenhaltungen:
- WO-A1-2013/037383
- DE-A1-102006 062 210
- US-A1- 2007 077 931
- US-A1- 2007 288 615
- US-A1- 2016 219 438

## Beschreibung

Die vorliegende Erfindung betrifft ein System und ein Verfahren zur nutzerindividuellen Missbrauchserkennung und -vermeidung bei Nutzung von Telekommunikationsdiensten.

Verfahren zur Missbrauchserkennung in Telekommunikationsnetzen konzentrieren sich bislang nahezu ausschließlich auf eine interne Sicherheit bzw. auf eine Verhinderung eigener Schäden, d.h. auf Schäden auf Seiten eines jeweiligen Telekommunikationsanbieters, wie bspw. finanzielle Verluste, Arbitrage-Effekte, Netzangriffe, Reputationsschäden, Erschleichung von Dienstleistungen, mögliche Zahlungsausfälle, AGB-Verstöße, etc.

Hierzu werden verschiedene Missbrauchssysteme bzw. regelbasierte Filter angewandt. Aufgrund der bisherigen Fokussierung auf interne Schadenspotentiale der Telekommunikationsanbieter bzw. -dienstleister, beziehen sich diese Filter-Regelwerke auf wenige Bedarfsträger aus einem jeweiligen netzinternen Umfeld, z. B. Service Provider, Wholesale-Partner, interne Stakeholder etc.

Die Anforderungssituation im Bereich "Sicherheit/Missbrauchserkennung" befindet sich in der Telekommunikationsbranche bereits im Umbruch. Dies hat folgende Gründe:
1. Zunehmende Missbrauchsszenarien mit technischen Angriffsvektoren und daraus resultierenden Schaden-Risiken für einen jeweiligen Telekommunikationskunden bzw. -nutzer.
2. Verbraucherschutzorganisationen, Gesetzgebung und Kunden/Nutzer fordern mehr Schutz für den Kunden/Nutzer durch den Telekommunikationsanbieter.
3. Kunden/Nutzer aus dem M2M-Umfeld (machine-to-machine) und dem IoT-Umfeld (Internet of Things) fordern von Telekommunikationsanbietern individuelle Überwachungs-/Einschränkungsmöglichkeiten ihrer Dienste bzw. deren Nutzung.
4. Telekommunikationsanbieter gehen dazu über, netzzentrische Sicherheitsprodukte einzuführen, um diese an einen jeweiligen Endkunden zu vermarkten.
Weder Fraud-Management-Systeme noch Personalkonzepte zum Betrieb dieser Systeme, d.h. Entwicklung, Konfiguration, Verwaltung, Überwachung der Filter/Fraud-Events, sind aktuell in der Lage, eine Vielzahl individueller Missbrauchserkennungsfilter zu managen.

In Zukunft müssen Telekommunikationsanbieter eine Fülle von individuellen Sicherheitsanforderungen aus dem externen Kundenumfeld realisieren. Aktuelle Fraud-Management-/Sicherheits-Systeme der Netze sind hierfür nicht ausgelegt. Im Fokus steht dabei eine Betrugsprävention bzw. eine kundenindividuelle Einschränkung von Telekommunikationsdiensten.

Die Druckschrift US 2007/0077931 A1 offenbart ein Verfahren zum Schützen eines Kommunikationsnetzwerks vor schadhaftem Code, der von einer Benutzerschnittstelle an das Kommunikationswerk übertragen wird.

In der Druckschrift US 2016/0219438 A1 wird ein System zur Verwendung bei einem mobilen Kommunikationsgerät offenbart, das dazu konfiguriert werden kann, unautorisierten Zugriff auf Komponenten des mobilen Kommunikationsgeräts zu erkennen.

Es war nunmehr eine Aufgabe der vorliegenden Erfindung, eine Möglichkeit zur nutzerindividuellen Missbrauchserkennung und -vermeidung bei Nutzung von Telekommunikationsdiensten eines Telekommunikationsanbieters bzw. Telekommunikationsdienstleisters in einem Telekommunikationsnetz durch einen Nutzer bereitzustellen.

Gelöst wird diese Aufgabe durch ein System bzw. ein Verfahren mit den Merkmalen der unabhängigen Ansprüche. Ausgestaltungen der Erfindung gehen aus den abhängigen Ansprüchen, der Beschreibung und den entsprechenden Zeichnungen hervor.

Es wird ein System zur nutzerindividuellen Missbrauchserkennung und -vermeidung bei Nutzung von Telekommunikationsdiensten eines Telekommunikationsanbieters in einem Telekommunikationsnetz durch einen Nutzer bereitgestellt. Das erfindungsgemäße System umfasst mindestens eine Steuereinheit, eine Schnittstelle zu dem Telekommunikationsnetz und einen Anknüpfungspunkt zur Herstellung einer kommunikativen Verbindung des Systems zu einem Kundenbeziehungsmanagementsystem (Customer Relationship Management - CRM) des Telekommunikationsanbieters. Dabei ist das System dazu konfiguriert, bei hergestellter kommunikativer Verbindung des Systems zu dem Kundenbeziehungsmanagementsystem des Telekommunikationsanbieters von dem Nutzer beauftragte Missbrauchserkennungs- und -vermeidungsfilter für für den Nutzer bereitgestellte Telekommunikationsdienste zu empfangen und mittels der Steuereinheit über die Schnittstelle zu dem Telekommunikationsnetz die für den Nutzer bereitgestellten Telekommunikationsdienste auf Basis der von dem Kunden beauftragten Filter zu überwachen und zu steuern.

Im Folgenden werden die Begriffe "Nutzer" und "Kunde" synonym zueinander verwendet. Gleiches gilt für die Begriffe "Telekommunikationsanbieter" und "Telekommunikationsdienstleister" sowie für die Begriffe "Dienste" und "Telekommunikationsdienste".

Unter "Missbrauchserkennungs- und -vermeidungsfilter" sind im Rahmen der vorliegenden Beschreibung sowohl seitens des Nutzers beauftragte Filter als auch seitens des Nutzer beauftragte Volumenbeschränkungen für ausgewählte und zuvor definierte Telekommunikationsverbindungen zu verstehen.

Das erfindungsgemäße System wird im Folgenden auch als Customer Related Security Profile oder kurz CRSP bezeichnet.

In Ausgestaltung umfasst das erfindungsgemäße System ferner eine Speichereinheit, in der die von dem Nutzer beauftragten Missbrauchserkennungs- und -vermeidungsfilter für die für den Nutzer bereitgestellten Telekommunikationsdienste abrufbar hinterlegbar sind.

Eine Ausführungsform des erfindungsgemäßen Systems umfasst ferner eine Nutzerschnittstelle, insbesondere eine grafische Nutzerschnittstelle. Es kann sich dabei um eine Web-GUI handeln. Der Nutzer kann entweder die Missbrauchserkennungs- und -vermeidungsfilter bei Vertragsschluss mit dem Telekommunikationsanbieter beauftragen oder aber über die Nutzerschnittstelle zu dem erfindungsgemäßen System selbst durch geeignete Eingaben einrichten. Dabei werden die Filter in der Regel auch direkt aktiviert, so dass unmittelbar nach Einrichten der Filter eine entsprechende Kontrolle der für den Nutzer bereitgestellten Dienste durchgeführt wird. Über die bereitgestellte Nutzerschnittstelle kann der Nutzer die beauftragten Filter jederzeit einsehen, ändern und/oder löschen. Es ist denkbar, dass dem Nutzer über die Nutzerschnittstelle ferner Analyse-, Reporting- und/oder Alarmierungswerkzeuge zur Verfügung gestellt werden. Derartige Werkzeuge können im Falle einer grafischen Nutzerschnittstelle bspw. als anklickbare und darüber auslösbare Buttons auf einem entsprechenden Display kenntlich gemacht sein. Das Display kann dabei auch eine berührungsempfindliche Oberfläche, d.h. ein Touchscreen sein, so dass der Nutzer durch unmittelbare Berührung der Buttons auf der Oberfläche die jeweiligen dahinter codierten Werkzeuge aktivieren kann.

In weiterer Ausgestaltung ist vorgesehen, dass das erfindungsgemäße System bei hergestellter kommunikativer Verbindung des Systems zu dem Kundenbeziehungsmanagementsystem des Telekommunikationsanbieters die von dem Nutzer beauftragten Missbrauchserkennungs- und -vermeidungsfilter für die für den Nutzer bereitgestellten Telekommunikationsdienste von dem Kundenbeziehungsmanagementsystem des Telekommunikationsanbieters erhält. Das bedeutet, dass der Nutzer bspw. ein Tarifangebot nutzt und eine entsprechende Beauftragung bei dem Telekommunikationsanbieter vornimmt, wobei mit Beauftragung seitens des Nutzers bereits Filter zur Nutzungseinschränkung/Überwachung, d.h. oben genannte Missbrauchserkennungs- und -vermeidungsfilter mit beauftragt werden und diese zusammen mit den für den Nutzer gemäß Tarifangebot bereitzustellenden Diensten von dem Telekommunikationsanbieter an das Kundenbeziehungsmanagementsystem weitergegeben und dort in einem für den Nutzer anzulegenden Profil hinterlegt werden. Die subskribierten Dienste werden dann von dem Kundenbeziehungsmanagementsystem an entsprechende "Service-Provisioning-Systeme", wie bspw. HLR (Home Location Register), HSS (Home Subscriber Server), AAA (Authentication Authorization Accounting), übertragen. Die "Service-Provisioning-Systeme" steuern im Anschluss die gebuchten/bereitgestellten Dienste innerhalb des Telekommunikationsnetzes bzw. einer damit verknüpften Netzinfrastruktur. Zusätzlich überträgt das Kundenbeziehungsmanagementsystem die beauftragten Missbrauchserkennungs- und -vermeidungsfilter für die für den Nutzer bereitgestellten Telekommunikationsdienste in bzw. an das erfindungsgemäße System, d.h. in CRSP.

Alternativ ist es auch denkbar, wie bereits voranstehend erwähnt, dass das erfindungsgemäße System die von dem Nutzer beauftragten Missbrauchserkennungs- und - vermeidungsfilter für die für den Nutzer bereitgestellten Telekommunikationsdienste über die Nutzerschnittstelle erhält.

Wie bereits voranstehend erwähnt, umfasst das erfindungsgemäße System in Ausgestaltung Analyse-, Reporting- und/oder Alarmierungsfunktionseinheiten bzw. -werkzeuge. Die Nutzerschnittstelle kann dazu ausgelegt sein, dass der Nutzer entsprechende Analyse-, Reporting- und/oder Alarmierungsfunktionen in Bezug auf die für den Nutzer bereitgestellten Telekommunikationsdienste über die Nutzerschnittstelle aktivieren und/oder deaktivieren kann.

In weiterer Ausgestaltung ist das erfindungsgemäße System ferner dazu ausgelegt, Daten zu Analyse-, Reporting- und/oder Alarmierungszwecken über die Schnittstelle zu dem Telekommunikationsnetz zu sammeln und in ein in dem System für den Nutzer angelegtes Profil zu übertragen.

Wenn der Nutzer nunmehr die beauftragten Dienste nutzt, werden diese Dienste auf Basis der von dem Nutzer für diese Dienste beauftragten Missbrauchserkennungs- und - vermeidungsfilter über die Schnittstelle zu dem Telekommunikationsnetz gesteuert und dabei auf vordefinierte Schwellwerte bzw. Filterkriterien, die in dem jeweiligen Filter definiert sind, überwacht. Bei der Schnittstelle zu dem Telekommunikationsnetz kann es sich insbesondere um eine Schnittstelle zu einem IN System (IN=Intelligent Network), d.h. bspw. zu einem Service Control Engine des Telekommunikationsnetzes handeln.

Über diese Schnittstelle werden auch Daten zu Reporting-/Analyse- und Alarmierungszwecken gesammelt und an das Profil des Nutzers, das in dem erfindungsgemäßen System hinterlegt ist, übertragen.

Bei den beauftragten Diensten kann es sich um Sprach(Voice)-, Daten- oder Kurznachrichten-(SMS)dienste handeln.

In noch weiterer Ausgestaltung ist das erfindungsgemäße System dazu ausgelegt, dass ein Fraud-Management-System des Telekommunikationsanbieters eine Möglichkeit hat, die von dem Nutzer beauftragten Filter auf einer durch das erfindungsgemäße System realisierten Plattform anzupassen.

Weiterhin ist es denkbar, dass die Analyse-, Reporting- und/oder Alarmierungsfunktionseinheiten bzw. -werkzeuge zusammen mit den entsprechenden Analyse-, Reporting- und/oder Alarmierungsfunktionen dem Fraud-Management-System des Telekommunikationsanbieters zur Nutzung bereitgestellt werden.

Die vorliegende Erfindung betrifft ferner ein Verfahren zur nutzerindividuellen Missbrauchserkennung und - vermeidung bei Nutzung von Telekommunikationsdiensten eines Telekommunikationsanbieters in einem Telekommunikationsnetz durch einen Nutzer, wobei von dem Nutzer beauftragte Missbrauchserkennungs- und -vermeidungsfilter für für den Nutzer bereitgestellte Telekommunikationsdienste empfangen und mittels einer Steuereinheit über eine Schnittstelle zu dem Telekommunikationsnetz die für den Nutzer bereitgestellten Telekommunikationsdienste auf Basis der von dem Nutzer beauftragten Filter überwacht und gesteuert werden.

Gemäß einer Ausführungsform des erfindungsgemäßen Verfahrens werden die von dem Nutzer beauftragten Missbrauchserkennungs- und -vermeidungsfilter für für den Nutzer bereitgestellte Telekommunikationsdienste über eine Nutzerschnittstelle von dem Nutzer und/oder von einem Kundenbeziehungsmanagementsystem des Telekommunikationsanbieters bereitstellt.

Ferner ist es denkbar, dass Daten zu Analyse-, Reporting- und/oder Alarmierungszwecken über die Schnittstelle zu dem Telekommunikationsnetz gesammelt und in ein für den Nutzer angelegtes Profil übertragen werden.

Bei Ausführung des erfindungsgemäßen Verfahrens wird vorzugsweise eine Ausführungsform des voranstehend beschriebenen erfindungsgemäßen Systems genutzt.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in den Zeichnungen schematisch dargestellt und wird im Folgenden unter Bezugnahme auf die Zeichnungen schematisch und ausführlich beschrieben.

Figur 1 zeigt in schematischer Darstellung eine Dienste-Beauftragung und -Bereitstellung wie sie gemäß dem Stand der Technik in einem Telekommunikationsnetz realisiert werden.

Figur 2 zeigt in schematischer Darstellung eine Dienste-Beauftragung und -Bereitstellung wie sie gemäß einer Ausführungsform des erfindungsgemäßen Verfahrens bei Nutzung einer Ausführungsform des erfindungsgemäßen Systems in einem Telekommunikationsnetz realisiert wird.

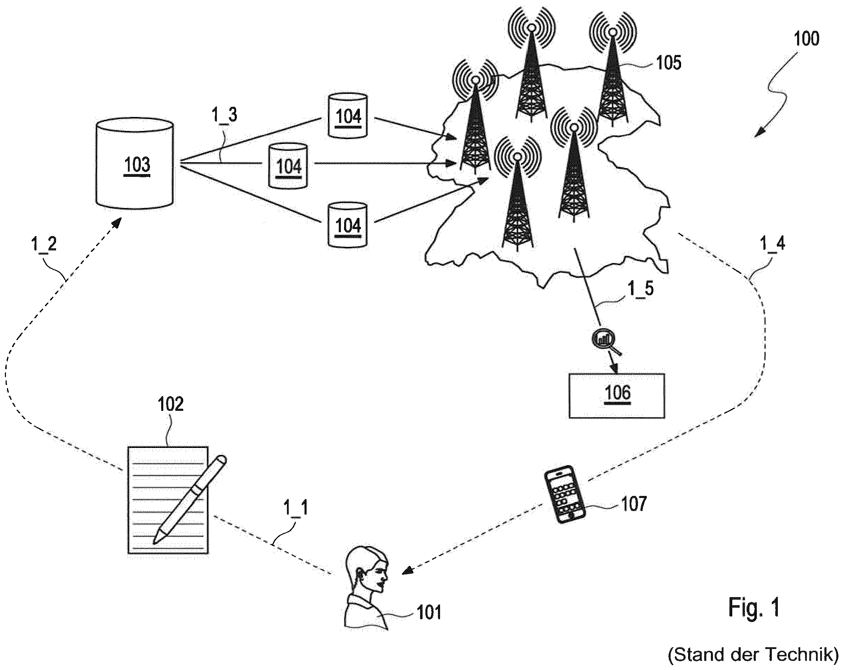

Figur 1 zeigt in schematischer Darstellung ein Zusammenspiel 100 aller bei Nutzung von Diensten in einem Telekommunikationsnetz beteiligten Komponenten. Gezeigt ist Nutzer 101, der ein Tarifangebot eines Telekommunikationsanbieters nutzen will und dazu in einem Schritt 1_1 einen entsprechenden Vertrag 102 mit dem Telekommunikationsanbieter unterschreibt, wodurch durch das Tarifangebot bereitzustellende Dienste beauftragt werden.

In einem Schritt 1_2 wird der Nutzer 101 durch den Telekommunikationsanbieter in Folge des unterzeichneten Vertrags 102 in ein Kundenbeziehungsmanagementsystem (Customer Relationship Management - CRM) 103 als Nutzer aufgenommen und mit den gemäß Vertrag 102 für den Nutzer 101 bereitzustellenden Diensten verknüpft.

In einem Schritt 1_3 werden von dem Kundenbeziehungsmanagementsystem 103 die von dem Nutzer 101 per Vertrag 102 beauftragten Dienste in ein Profil bzw. ein "Service-Provisioning-System" 104, wie bpsw. HLR (Home Location Register), HSS (Home Subscriber Server), AAA (Authentication-Authorization-Accounting), übertragen.

Im Anschluss daran steuert ein jeweiliges System 104, wie durch jeweilige Pfeile kenntlich gemacht, die von dem Nutzer 101 gebuchten bzw. für den Nutzer 101 bereitgestellten Dienste innerhalb einer Netzinfrastruktur 105. Diese Dienste werden dem Nutzer 101 dann in Schritt 1_4 bspw. über sein Mobiltelefon 107 zur Verfügung gestellt. Eine nutzerindividuelle Anpassung bzw. Einschränkung der Dienste ist hierbei nicht möglich. Damit ist auch keine Missbrauchsbegrenzung durch den Nutzer 101 möglich. Wird bspw. der Nutzer 101 Opfer einer Hacking-Attacke, indem bspw. ohne sein Wissen von einem Dritten Tausende von Verkehrsminuten auf hochpreisige Zielrufnummern generiert werden, muss der Nutzer 101 die Kosten dafür tragen.

Ein von dem entsprechenden Telekommunikationsanbieter eingerichtetes Betrugsmanagement-System 106 (Fraud Management System) überwacht in einem Schritt 1_5 lediglich Telekommunikationanbieter eigene Risiken und Schadenspotentiale.

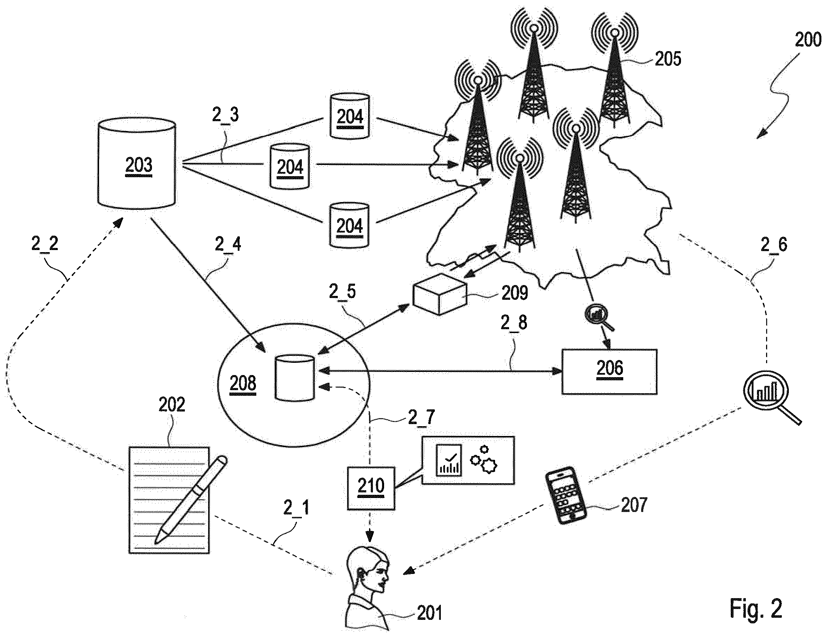

Figur 2 zeigt in schematischer Darstellung ein Zusammenspiel 200 aller bei Nutzung von Diensten in einem Netzwerk bzw. Telekommunikationsnetz beteiligten Komponenten unter Nutzung einer Ausführungsform des erfindungsgemäßen Systems bzw. bei Anwendung einer Ausführungsform des erfindungsgemäßen Verfahrens.

Gezeigt ist ein Nutzer 201, der ein Tarifangebot eines Telekommunikationsanbieters nutzen will und dazu in einem Schritt 2_1 einen entsprechenden Vertrag 202 mit dem Telekommunikationsanbieter unterschreibt, wodurch durch das Tarifangebot bereitzustellende Dienste beauftragt werden. Ferner kann der Nutzer 201 in diesem Fall bereits bei Vertragsabschluss Missbrauchserkennungs- und - vermeidungsfilter beauftragen.

In einem Schritt 2_2 wird der Nutzer 201 durch den Telekommunikationsanbieter in Folge des unterzeichneten Vertrags 202 in ein Kundenbeziehungsmanagementsystem (CRM) 203 als Nutzer aufgenommen und mit den für den Nutzer 201 bereitzustellenden Diensten gemäß Vertrag 202 verknüpft. In einem Schritt 2_3 werden von dem Kundenbeziehungsmanagementsystem 203 die von dem Nutzer 201 per Vertrag 202 beauftragten Dienste in ein Profil bzw. ein "Service-Provisioning-System" 204, wie bpsw. HLR (Home Location Register), HSS (Home Subscriber Server), AAA (Authentication-Authorization-Accounting), übertragen.

Im Anschluss daran steuert ein jeweiliges System 204, wie durch jeweilige Pfeile kenntlich gemacht, die von dem Nutzer 201 gebuchten bzw. für den Nutzer 201 bereitgestellten Dienste innerhalb einer Netzinfrastruktur 205. Diese Dienste werden dem Nutzer 201 dann in Schritt 2_6 bspw. über sein Mobiltelefon 207 zur Verfügung gestellt.

Zusätzlich zu der Übertragung der beauftragten Dienste in ein "Service-Provisioning-System" 204, werden die bei Vertragsabschluss durch den Nutzer 201 beauftragten Missbrauchserkennungs- und -vermeidungsfilter in einem Schritt 2_4 in ein erfindungsgemäß ausgestaltetes System zur nutzerindividuellen Missbrauchserkennung und -vermeidung (CRSP - Customer Related Security Profile) 208 übertragen. Über eine Schnittstelle 2_5 zu mit dem Netzwerk bzw. dem Telekommunikationsnetz 205 verknüpften IN-Systemen 209 kann CRSP 208 nun die für den Nutzer 201 in dem Netzwerk 205 bereitgestellten Dienste, wie bspw. Voice-, Daten-, SMS-Dienste etc., auf Basis der von dem Nutzer 201 beauftragten Missbrauchserkennungs- und -vermeidungsfilter steuern. Bei den IN-Systemen 209 handelt es sich bspw. um Service Control Engines. Über die Schnittstelle 2_5 können auch Daten zu Reporting/Analyse- und Alarmierungszwecken von dem Telekommunikationsnetz 205 gesammelt und an ein in CRSP 208 hinterlegtes Profil des Nutzers 201 übertragen werden. Das in CRSP 208 hinterlegte Profil des Nutzers 201 umfasst insbesondere die von dem Nutzer 201 beauftragten Missbrauchserkennungs- und -vermeidungsfilter.

Der Nutzer 201 nutzt die von ihm beauftragten Dienste, d.h. die subskribierten Dienste, wie durch 2_6 kenntlich gemacht. Die Dienste werden dabei auf mit den für den Nutzer 201 hinterlegten Filtern verbundene und somit in CRSP vordefinierte Schwellwerte bzw. Filterkriterien überwacht.

Der Nutzer 201 kann ferner in einem Schritt 2_7 die von ihm beauftragten Filter über eine ferner vorgesehene Schnittstelle 210 jederzeit einsehen, ändern und/oder löschen. Er kann darüber auch neue Filter hinzufügen. Die geänderten, gelöschten oder hinzugefügten Filter sind dann entsprechend in CRSP 208 zu hinterlegen. Bei der Schnittstelle 210 handelt es sich vorzugsweise um eine grafische Nutzerschnittstelle. Dabei ist es auch denkbar, dass die grafische Nutzerschnittstelle als Touchscreen ausgestaltet ist. Über die Nutzerschnittstelle 210 werden dem Nutzer 201 auch Analyse-, Reporting- und/oder Alarmierungswerkzeuge zur Verfügung gestellt bzw. der Nutzer 201 kann eines oder mehrere dieser Werkzeuge über die Schnittstelle 210 auslösen bzw. aktivieren.

Ein von dem Telekommunikationsanbieter eingerichtetes Betrugsmanagement-System 206 (Fraud Management System) überwacht lediglich Telekommunikationanbieter eigene Risiken und Schadenspotentiale. Das Fraud Management System 206 hat optional über das CRSP 208 die Möglichkeit, die vom Nutzer 201 definierten Filter mit niedrigeren Schwellwerten/Einschränkungen anzupassen. Weiterhin können die verfügbaren Analyse-, Reporting- und/oder Alarmierungswerkzeuge für das interne Fraud Management System 206 genutzt werden. Eine derartige Funktion bietet dem Telekommunikationsanbieter eine zusätzliche Detektion-/Präventions-Funktion zur Reduzierung eigener Fraud-Risiken, wenn bspw. ein Nutzer beabsichtigt, die beauftragten Dienste missbräuchlich zu nutzen, wie bspw. im Falle eines IRSF-Nutzers (International Revenue Sharing Fraud).

Im Folgenden werden beispielhaft einige reelle Missbrauchsszenarien vorgestellt, die auf Basis einer Ausführungsform des erfindungsgemäßen Verfahrens durch den Nutzer 201 individuell erkannt und durch Einsatz von geeignet definierten Filtern verhindert werden können.
1. Ein mobiles Endgerät eines Kunden/Nutzers wird durch einen Angreifer gehackt. Der Angreifer generiert auf Basis eines installierten Schadprogramms, d.h einer Malware, missbräuchliche Anrufe auf hochpreisige Zielrufnummern, welche dem Nutzer in Rechnung gestellt werden. Mit Hilfe einer Verwendung einer Ausführungsform des erfindungsgemäßen Systems bzw. bei Anwendung einer Ausführungsform des erfindungsgemäßen Verfahrens kann der Nutzer zur Vermeidung eines derartigen Szenarios einen Filter oder eine Volumenbegrenzung auf hochpreisige Zielrufnummern, wie bspw. internationale Ziele der Ländergruppe 3, Premiumdienste, aktivieren.
2. Ein PBX (Private Branch Exchange) System eines Nutzers wird durch einen Angreifer gehackt. Der Angreifer generiert durch einen Fernzugang missbräuchliche Anrufe auf hochpreisige Zielrufnummern, welche dem Nutzer in Rechnung gestellt werden. Auch hier kann der Nutzer mit Hilfe einer Verwendung einer Ausführungsform des erfindungsgemäßen Systems bzw. bei Anwendung einer Ausführungsform des erfindungsgemäßen Verfahrens zur Vermeidung eines derartigen Szenarios einen Filter oder eine Volumenbegrenzung auf hochpreisige Zielrufnummern, wie bspw. internationale Ziele der Ländergruppe 3, Premiumdienste, aktivieren.
3. Ein Router des Nutzers wird durch eine Software-Schwachstelle bzw. über einen Wartungszugang durch einen Angreifer gehackt. Der Angreifer generiert durch einen Fernzugang missbräuchliche Anrufe auf hochpreisige Zielrufnummern bzw. übernimmt Nutzer-Credentials (Nutzer-Berechtigungen). Die missbräuchlichen Verbindungen werden dem Nutzer/Kunden in Rechnung gestellt. Auch hier kann der Nutzer mit Hilfe einer Verwendung einer Ausführungsform des erfindungsgemäßen Systems bzw. bei Anwendung einer Ausführungsform des erfindungsgemäßen Verfahrens zur Vermeidung eines derartigen Szenarios einen Filter oder eine Volumenbegrenzung auf hochpreisige Zielrufnummern, wie bspw. internationale Ziele der Ländergruppe 3, Premiumdienste, aktivieren.
4. Ein Nutzer/Kunde nutzt GSM Modems zur Fernwartung von Windparks. Diese Modems werden in der Regel zur Überwachung, Fehler-Alarmierung und Steuerung der jeweiligen Windkraftanlage eingesetzt und generieren pro Monat max. 100 Anrufe/SMS (Alarmierung) zu einer vorgesehenen Überwachungszentrale. Aufgrund eines schwachen Passworts bzw. eines Softwarefehlers gelingt es einem Angreifer diese GSM Modems zu hacken. Der Angreifer generiert auf Basis dieser Zugriffsmöglichkeit missbräuchliche Anrufe auf hochpreisige Zielrufnummern, welche dem Nutzer in Rechnung gestellt werden. Mit Hilfe einer Verwendung einer Ausführungsform des erfindungsgemäßen Systems bzw. bei Anwendung einer Ausführungsform des erfindungsgemäßen Verfahrens kann der Nutzer als Filter eine Whitelist-Funktion hinterlegen, die genau definiert, welche Zielrufnummer(n) erlaubt sind. Hier wäre dann bspw. ausschließlich die Rufnummer der Überwachungszentrale zu hinterlegen. Ferner kann er auf Basis der maximal zu erwartenden Anrufe/SMS zu dieser Zielrufnummer eine Volumenbegrenzung festlegen. Zusätzlich kann eine Whitelist bzgl. erlaubter APNs (Access Point Name) definiert und hinterlegt werden.
5. Ein Nutzer/Kunde nutzt eine IoT-Funktion seiner Alarmanlage, bspw. zu Steuerungs- und/oder Alarmierungszwecken. Der Nutzer erwartet von seiner Alarmanlage dadurch pro Monat max. 100 Anrufe/SMS (Alarmierung), welche lediglich auf Endgeräten von Familienmitgliedern des Nutzers empfangen werden. Aufgrund eines schwachen Passworts und/oder eines Softwarefehlers gelingt es einem Angreifer dieses IoT-Gerät, d.h. hier die Alarmanlage zu hacken. Der Angreifer generiert auf Basis dieser Zugriffsmöglichkeit missbräuchliche Anrufe auf hochpreisige Zielrufnummern, welche dem Nutzer in Rechnung gestellt werden. Mit Hilfe einer Verwendung einer Ausführungsform des erfindungsgemäßen Systems bzw. bei Anwendung einer Ausführungsform des erfindungsgemäßen Verfahrens kann der Nutzer als Filter eine Whitelist-Funktion hinterlegen, in welcher er bspw. ausschließlich alle Rufnummern der Familienmitglieder hinterlegt. Dadurch können Premium-Dienste, Ziele im Ausland gesperrt werden. Ferner kann der Nutzer eine Volumenbegrenzung auf Basis der maximal zu erwartenden Anrufe/SMS vorsehen. Zusätzlich kann eine Whitelist bzgl. erlaubter und/oder eine Blacklist bzgl. gesperrter APNs (Access Point Name) definiert werden.
6. Bei einem Auslandsaufenthalt wird der Nutzer Opfer eines Taschendiebstahls, wobei sein Mobilfunkgerät samt SIM-Karte entwendet wird. Obwohl der Nutzer bereits am darauffolgenden Tag den Geräte- bzw. Kartenverlust bemerkt und eine Kartensperre beauftragt, gelingt es den Tätern mit der gestohlenen SIM-Karte (im Falle, dass der Nutzer seine SIM-Sperre vergessen hat) missbräuchliche Anrufe zu hochpreisigen Zielrufnummern, insbesondere ins weitere Ausland zu generieren. Der Nutzer trägt die Kosten für die Anrufe. Mit Hilfe einer Verwendung einer Ausführungsform des erfindungsgemäßen Systems bzw. bei Anwendung einer Ausführungsform des erfindungsgemäßen Verfahrens kann der Nutzer zur Vermeidung eines derartigen Szenarios einen Filter auf hochpreisige Zielrufnummern, wie bspw. internationale Ziele der Ländergruppe 3, Premiumdienste, sowie eine Volumenbegrenzung für abgehende Voice/Daten/SMS-Verbindungen im Ausland aktivieren.
7. Der Nutzer besitzt einen Festnetzanschluss mit einem APL (Abschlusspunkt Linie) im Außenbereich seines Hauses. Täter öffnen dieses APL und nutzen die Anschlussleitung des Nutzers, um missbräuchliche sogenannte Pay-Safer-Rufnummern anzurufen (Clip-on-fraud). Die so generierten Anrufe/Umsatzvolumina kann sich der Täter anschließend anonym auszahlen lassen und werden dem Anschlussinhaber, d.h. dem Nutzer mit einer nächsten Monatsrechnung des Telekommunikationsanbieters in Rechnung gestellt. Mit Hilfe einer Verwendung einer Ausführungsform des erfindungsgemäßen Systems bzw. bei Anwendung einer Ausführungsform des erfindungsgemäßen Verfahrens kann der Nutzer einen Filter für Pay-Safer-Dienste aktivieren.

Das erfindungsgemäße System ermöglicht eine Konfiguration von nutzerindividuellen Schwellwerten bzw. Filtern für eine Einschränkung von Diensten durch den Nutzer. Der Nutzer kann hierbei, in Abhängigkeit seines zu erwartenden Nutzerverhaltens, bestimmte Dienste einschränken, wie bspw. Auslandstelefonie, Gesprächsvolumen, etc., oder vollständig sperren.

Dazu können die erfindungsgemäß vorgesehenen Missbrauchserkennungs- und -vermeidungsfilter bspw. folgende Filter-Funktionen umfassen:
- Volumenbegrenzungen/Zeiteinheit (Filteranwendung: Sperrung oder Alarmierung)
- Whitelist-Funktionen (SMS, Voice, Daten)
- Blacklist-Funktionen (SMS, Voice, Daten)
- Sperre von internationalen Zielrufnummern
- Sperre von hochpreisigen Zielrufnummern (z. B. Ländergruppe 3, Premium-Dienste, "special number ranges")
- Sperren von bestimmten APNs
- Roaming-Sperren
- Volumenbegrenzungen/Sperren im Roamingfall
- Rufumleitungsbegrenzungen (z.B. zu internationalen Zielrufnummern, maximale Anzahl von parallelen Rufumleitungen)

Optional kann der Nutzer auch Analyse-, Reporting- und Alarmierungswerkzeuge nutzen.

Weiter optional kann der Nutzer gleichzeitig Filter-, Analyse-, Reporting- und Alarmierungswerkzeuge für eine Gruppe von SIM-Karten, bspw. für alle SIM-Karten eines M2M-, IoT-Anbieters oder eines Rahmenvertrags nutzen.

Ferner kann der Nutzer die Filterfunktionen/Dienste-Einschränkungen bei Vertragsabschluss oder während der Vertragslaufzeit über eine Nutzerschnittstelle, bspw. eine Web-GUI vornehmen.

Darüber hinaus kann das erfindungsgemäße System auch von dem Telekommunikationsanbieter zur nutzerindividuellen Überwachung/Einschränkung bei einem Missbrauchsverdacht sowie zur Erfassung von Dienste-Nutzungsdaten zur Fraud-Analyse/Detektion/Prävention genutzt werden.

## Patentansprüche

1. System zur nutzerindividuellen Missbrauchserkennung und -vermeidung bei Nutzung von Telekommunikationsdiensten eines Telekommunikationsanbieters in einem Telekommunikationsnetz (205) durch einen Nutzer (201), wobei das System (208) mindestens eine Steuereinheit, eine Schnittstelle (2_5) zu dem Telekommunikationsnetz (205) und einen Anknüpfungspunkt (2_4) zur Herstellung einer kommunikativen Verbindung des Systems (208) zu einem Kundenbeziehungsmanagementsystem (203) des Telekommunikationsanbieters umfasst, und wobei das System (208) dazu konfiguriert ist, bei hergestellter kommunikativer Verbindung des Systems (208) zu dem Kundenbeziehungsmanagementsystem (203) des Telekommunikationsanbieters von dem Nutzer (201) beauftragte Missbrauchserkennungs- und -vermeidungsfilter für für den Nutzer (201) bereitgestellte Telekommunikationsdienste von dem Kundenbeziehungsmanagementsystem (203) zu empfangen und mittels der Steuereinheit über die Schnittstelle (2_5) zu dem Telekommunikationsnetz die für den Nutzer (201) bereitgestellten Telekommunikationsdienste auf Basis der von dem Nutzer (201) beauftragten Filter zu überwachen und zu steuern.

2. System nach Anspruch 1, das ferner eine Speichereinheit umfasst, in der die von dem Nutzer (201) beauftragten Missbrauchserkennungs- und -vermeidungsfilter für die für den Nutzer (201) bereitgestellten Telekommunikationsdienste abrufbar hinterlegbar sind.

3. System nach Anspruch 1 oder 2, das ferner eine Nutzerschnittstelle (210), insbesondere eine grafische Nutzerschnittstelle umfasst.

4. System nach Anspruch 1, 2 oder 3, das bei hergestellter kommunikativer Verbindung des Systems (208) zu dem Kundenbeziehungsmanagementsystem (203) des Telekommunikationsanbieters von dem Kundenbeziehungsmanagementsystem (203) des Telekommunikationsanbieters Informationen, welche Telekommunikationsdienste für den Nutzer bereitgestellt sind, und die von dem Nutzer (201) beauftragten Missbrauchserkennungs- und -vermeidungsfilter für die für den Nutzer (201) bereitgestellten Telekommunikationsdienste erhält.

5. System nach Anspruch 1, 2 oder 3, das bei hergestellter kommunikativer Verbindung des Systems zu dem Kundenbeziehungsmanagementsystem (203) des Telekommunikationsanbieters von dem Kundenbeziehungsmanagementsystem (203) des Telekommunikationsanbieters Informationen, welche Telekommunikationsdienste für den Nutzer (201) bereitgestellt sind, und über die Nutzerschnittstelle (210) die von dem Nutzer (201) beauftragten Missbrauchserkennungs- und - vermeidungsfilter für die für den Nutzer (201) bereitgestellten Telekommunikationsdienste erhält.

6. System nach einem der Ansprüche 3 bis 5, bei dem die Nutzerschnittstelle (210) dazu ausgelegt ist, dass der Nutzer (201) die von dem Nutzer (201) beauftragten Filter einsehen, ändern und/oder löschen kann und/oder neue Filter hinzufügen kann.

7. System nach einem der Ansprüche 3 bis 6, das ferner Analyse-, Reporting- und/oder Alarmierungsfunktionseinheiten umfasst und bei dem die Nutzerschnittstelle (210) dazu ausgelegt ist, dass der Nutzer (201) entsprechende Analyse-, Reporting- und/oder Alarmierungsfunktionen in Bezug auf die für den Nutzer (201) bereitgestellten Telekommunikationsdienste aktiviert und/oder deaktivieren kann.

8. System nach Anspruch 7, das dazu ausgelegt ist, Daten zu Analyse-, Reporting- und/oder Alarmierungszwecken über die Schnittstelle (2_5) zu dem Telekommunikationsnetz (205) zu sammeln und in ein in dem System (208) für den Nutzer (201) angelegtes Profil zu übertragen.

9. System nach einem der voranstehenden Ansprüche, das dazu ausgelegt ist, dass ein Fraud-Management-System (206) des Telekommunikationsanbieters eine Möglichkeit hat, die von dem Nutzer (201) beauftragten Filter auf einer durch das System (208) realisierten Plattform anzupassen.

10. System nach Anspruch 7, das dazu ausgelegt ist, die Analyse-, Reporting- und/oder Alarmierungsfunktionseinheiten zusammen mit den entsprechenden Analyse-, Reporting- und/oder Alarmierungsfunktionen einem Fraud-Management-System (206) des Telekommunikationsanbieters zur Nutzung bereitzustellen.

11. Verfahren zur nutzerindividuellen Missbrauchserkennung und -vermeidung bei Nutzung von Telekommunikationsdiensten eines Telekommunikationsanbieters in einem Telekommunikationsnetz (205) durch einen Nutzer (201), wobei das Verfahren die folgenden Verfahrensschritte umfasst:
- Bereitstellen eines Systems (208) nach einem der Ansprüche 1 bis 10,
wobei das System (208) mindestens eine Steuereinheit, eine Schnittstelle (2_5) zu dem Telekommunikationsnetz (205) und einen Anknüpfungspunkt (2_4) zur Herstellung einer kommunikativen Verbindung des Systems (208) zu dem Kundenbeziehungsmanagementsystem (203) des Telekommunikationsanbieters umfasst,
- Herstellen einer kommunikativen Verbindung des Systems (208) zu einem Kundenbeziehungsmanagementsystem (203) des Telekommunikationsanbieters und
- Empfangen von durch den Nutzer (201) beauftragten Missbrauchserkennungs- und
- vermeidungsfilter für für den Nutzer (201) bereitgestellte Telekommunikationsdienste, durch das System (208) bei hergestellter kommunikativer Verbindung des Systems zu dem Kundenbeziehungsmanagementsystem (203),
- Steuern und Überwachen der für den Nutzer (201) bereitgestellten Telekommunikationsdienste auf Basis der von dem Nutzer (201) beauftragten Filter mittels der von dem System umfassten Steuereinheit über die von dem System umfasste Schnittstelle (2_5) zu dem Telekommunikationsnetz (205).

12. Verfahren nach Anspruch 11, bei dem die von dem Nutzer (201) beauftragten Missbrauchserkennungs- und -vermeidungsfilter für für den Nutzer bereitgestellte Telekommunikationsdienste von einem Kundenbeziehungsmanagementsystem (203) des Telekommunikationsanbieters und/oder über eine Nutzerschnittstelle (210) von dem Nutzer (201) bereitgestellt werden.

13. Verfahren nach einem der Ansprüche 11 oder 12, bei dem Daten zu Analyse-, Reporting- und/oder Alarmierungszwecken über die Schnittstelle (2_5) zu dem Telekommunikationsnetz (205) gesammelt und in ein für den Nutzer (201) angelegtes Profil übertragen werden.

## Claims

1. A system for user-individual detection and avoidance of misuse during use of telecommunication services of a telecommunication provider within a telecommunication network (205) by a user (201), wherein the system (208) comprises at least a control unit, an interface (2_5) to the telecommunication network (205) and a connection point (2_4) for establishing a communication connection of the system (208) to a customer relationship management system (203) of the telecommunication provider, and wherein the system (208) is configured, once the communication connection of the system (208) to the customer relationship management system (203) of the telecommunication provider is established, to receive misuse detection and avoidance filters imposed by the user (201) for the telecommunication services provided for the user (201) from the customer relationship management system (203) and, by means of the control unit via the interface (2_5) to the telecommunication network, to monitor and control the telecommunication services provided for the user (201) on the basis of the filters imposed by the user (201).

2. The system according to claim 1, that further comprises a memory unit in which the misuse detection and avoidance filters imposed by the user (201) for the telecommunication services provided for the user (201) may be retrievably stored.

3. The system according to claim 1 or 2, that further comprises a user interface (210), in particular, a graphical user interface.

4. The system according to claim 1, 2 or 3 that, once the communication connection of the system (208) to the customer relationship management system (203) of the telecommunication provider is established, receives information from the customer relationship management system (203) of the telecommunication provider as to which telecommunication services are provided for the user and the misuse detection and avoidance filters imposed by the user (201) for the telecommunication services provided for the user (201).

5. The system according to claim 1, 2 or 3 that, once the communication connection of the system to the customer relationship management system (203) of the telecommunication provider is established, receives information from the customer relationship management system (203) as to which telecommunication services are provided for the user (201) and via the user interface (210) receives the misuse detection and avoidance filters imposed by the user (201) for the telecommunication services provided for the user (201).

6. The system according to any one of claims 3 to 5, in which the user interface (210) is designed such that the user (201) can view, change and/or delete the filters imposed by the user (201) and/or add new filters.

7. The system according to any one of claims 3 to 6, that further comprises analysis, reporting and/or alarm functional units and in which the user interface (210) is designed such that the user (201) can activate and/or deactivate corresponding analysis, reporting and/or alarm functions in relation to the telecommunication services provided for the user (201).

8. The system according to claim 7, that is designed to collect data for analysis, reporting and/or alarm purposes via the interface (2_5) to the communication network (205) and to transfer the data into a profile created in the system (208) for the user (201).

9. The system according to any one of the preceding claims that is designed such that a fraud management system (206) of the telecommunication provider has an option for adjusting the filters imposed by the user (201) on a platform realized by the system (208).

10. The system according to claim 7, that is designed to provide the analysis, reporting and/or alarm functional units together with the corresponding analysis, reporting and/or alarm functions to a fraud management system (206) of the telecommunication provider for use.

11. A method for user-individual detection and avoidance of misuse during use of telecommunication services of a telecommunication provider within a telecommunication network (205) by a user (201), wherein the method comprises the following method steps:
- Providing a system (208) according to any one of claims 1 to 10,
wherein the system (208) comprises at least one control unit, one interface (2_5) to the telecommunication network (205) and one connection point (2_4) for establishing a communication connection of the system (208) to the customer relationship management system (203) of the telecommunication provider,
- establishing a communication connection of the system (208) to a customer relationship management system (203) of the telecommunication providers, and
- receiving misuse detection and avoidance filters imposed by the user (201) for telecommunication services provided for the user (201), by the system (208) during the established communication connection of the system to the customer relationship management system (203),
- controlling and monitoring the telecommunication services provided for the user (201) on the basis of the filters imposed by the user (201) by means of the control unit comprised by the system, via the interface (2_5) comprised by the system to the telecommunication network (205).

12. The method according to claim 11, in which the misuse detection and avoidance filters imposed by the user (201) are provided for the telecommunication services provided for the user by a customer relationship management system (203) of the telecommunication provider and/or via a user interface (210) by the user (201).

13. The method according to any one of claims 11 or 12, in which data for analysis, reporting and/or alarm purposes is collected via the interface (2_5) to the telecommunication network (205) and transferred into a profile created for the user (201).

## Revendications

1. Système individualisé permettant à un utilisateur (201) la reconnaissance et l'évitement d'un mauvais usage lors de l'utilisation de services de télécommunications d'un fournisseur de télécommunications dans un réseau de télécommunications (205), sachant que le système (208) comprend au moins une unité de contrôle, une interface (2_5) avec le réseau de télécommunications (205) et un point de connexion (2_4) permettant d'établir une liaison de communication entre le système (208) et un système de gestion de relation client (203) du fournisseur de télécommunications et que ledit système (208) est configuré de manière à recevoir du système de gestion de relation client (203), lorsque la liaison de communication est établie entre le système (208) et le système de gestion de relation client (203) du fournisseur de télécommunications, des filtres de reconnaissance et d'évitement de mauvais usage commandés par l'utilisateur (201) pour des services de télécommunications fournis à l'utilisateur (201) et de manière à surveiller et à contrôler les services de télécommunications fournis à l'utilisateur (201) au moyen de l'unité de contrôle via l'interface (2_5) avec le réseau de télécommunications, sur la base des filtres commandés par l'utilisateur (201).

2. Système selon la revendication 1, comprenant également une unité de stockage permettant de stocker et de consulter les filtres de reconnaissance et d'évitement de mauvais usage commandés par l'utilisateur (201) pour les services de télécommunications fournis à l'utilisateur (201).

3. Système selon la revendication 1 ou 2, comprenant également une interface utilisateur (210), en particulier une interface utilisateur graphique.

4. Système selon la revendication 1, 2 ou 3, qui reçoit du système de gestion de relation client (203) du fournisseur de télécommunications, lorsque la liaison de communication est établie entre le système (208) et le système de gestion de relation client (203) du fournisseur de télécommunications, des informations sur les services de télécommunications fournis à l'utilisateur et les filtres de reconnaissance et d'évitement de mauvais usage commandés par l'utilisateur (201) pour les services de télécommunications fournis à l'utilisateur (201).

5. Système selon la revendication 1, 2 ou 3, qui reçoit du système de gestion de relation client (203) du fournisseur de télécommunications, lorsque la liaison de communication est établie entre le système et le système de gestion de relation client (203) du fournisseur de télécommunications, des informations sur les services de télécommunications fournis à l'utilisateur (201) et, via l'interface utilisateur (210), les filtres de reconnaissance et d'évitement de mauvais usage commandés par l'utilisateur (201) pour les services de télécommunications fournis à l'utilisateur (201).

6. Système selon l'une des revendications 3 à 5, dans lequel l'interface utilisateur (210) est conçue pour permettre à l'utilisateur (201) de consulter, de modifier et/ou de supprimer les filtres commandés par l'utilisateur (201) et/ou d'ajouter de nouveaux filtres.

7. Système selon l'une des revendications 3 à 6, qui comprend en outre des unités fonctionnelles d'analyse, de reporting et/ou d'alarme et dans lequel l'interface utilisateur (210) est conçue pour permettre à l'utilisateur (201) d'activer et/ou de désactiver des fonctions d'analyse, de reporting et/ou d'alarme correspondantes par rapport aux services de télécommunications fournis à l'utilisateur (201) .

8. Système selon la revendication 7, conçu de manière à collecter des données à des fins d'analyse, de reporting et/ou d'alarme via l'interface (2_5) avec le réseau de télécommunications (205) et à les transférer vers un profil créé dans le système (208) pour l'utilisateur (201).

9. Système selon l'une des revendications précédentes, conçu pour permettre à un système de gestion antifraude (206) du fournisseur de télécommunications de moduler les filtres commandés par l'utilisateur (201) sur une plateforme réalisée par le système (208).

10. Système selon la revendication 7, conçue de manière à fournir à des fins d'utilisation les unités fonctionnelles d'analyse, de reporting et/ou d'alarme conjointement avec les fonctions d'analyse, de reporting et/ou d'alarme correspondantes à un système de gestion antifraude (206) du fournisseur de télécommunications.

11. Procédé individualisé permettant à un utilisateur (201) la reconnaissance et l'évitement d'un mauvais usage lors de l'utilisation de services de télécommunications d'un fournisseur de télécommunications dans un réseau de télécommunications (205), comprenant les étapes de procédé suivantes :
- la mise à disposition d'un système (208) réalisé selon l'une des revendications 1 à 10,
ledit système (208) comprenant au moins une unité de contrôle, une interface (2_5) avec le réseau de télécommunications (205) et un point de connexion (2_4) permettant d'établir une liaison de communication entre le système (208) et le système de gestion de relation client (203) du fournisseur de télécommunications,
l'établissement d'une liaison de communication entre le système (208) et un système de gestion de relation client (203) du fournisseur de télécommunications et
- la réception de filtres de reconnaissance et d'évitement de mauvais usage commandés par l'utilisateur (201) pour des services de télécommunications fournis à l'utilisateur (201), par le système (208) pendant la connexion établie entre le système et le système de gestion de relation client (203),
- le contrôle et la surveillance des services de télécommunications fournis à l'utilisateur (201) sur la base des filtres commandés par l'utilisateur (201), au moyen de l'unité de contrôle, incluse dans le système, via l'interface (2_5) avec le réseau de télécommunications (205), incluse dans le système.

12. Procédé selon la revendication 11, pour lequel les filtres de reconnaissance et d'évitement de mauvais usage commandés par l'utilisateur (201) pour des services de télécommunications fournis à l'utilisateur sont mis à disposition par un système de gestion de relation client (203) du fournisseur de télécommunications et/ou par l'utilisateur (201) via une interface utilisateur (210).

13. Procédé selon l'une des revendications 11 ou 12, pour lequel des données sont collectées à des fins d'analyse, de reporting et/ou d'alarme via l'interface (2_5) avec le réseau de télécommunications (205) et transférées vers un profil créé pour l'utilisateur (201).
